# EUROPÄISCHE PATENTSCHRIFT

(11) **EP 2 540 427 B1**
(45) Veröffentlichungstag und Bekanntmachung des Hinweises auf die Patenterteilung: **25.03.2015**
(21) Anmeldenummer: 12174312.4
(22) Anmeldetag: 29.06.2012
(51) Int. Cl.: B23C 5/10, B24D 7/18, B24D 99/00

(54) **Fräswerkzeug**
Milling tool
Outil de fraisage

(30) Priorität: 01.07.2011 DE 102011051495
(43) Veröffentlichungstag der Anmeldung: 02.01.2013
(73) Patentinhaber: Gruber, Daniel, 5230 Mattighofen (AT)
(72) Erfinder: Gruber, Daniel, 5230 Mattighofen (AT)
(74) Vertreter: Gustorf, Gerhard

(56) Entgegenhaltungen:
- EP-A1- 2 082 835
- US-A- 5 447 467

## Beschreibung

Die Erfindung betrifft ein Fräswerkzeug aus Hartmetall mit einem zylinderförmigen Schaft und einem mit Hartmineral, insbesondere Diamant, beschichteten oder bestückten Schneidkopf zum Stirnen von Werkstücken nach dem Oberbegriff des Patentanspruchs 1.

Bei der spanenden Bearbeitung von Werkstücken aus sehr hartem Material unterliegen die hierfür verwendeten Fräswerkzeuge einem großen Verschleiß. Dieses Problem tritt insbesondere auch bei der Profilbearbeitung von Werkstücken aus Graphit auf, um aus diesen beispielsweise Elektroden zur Funkenerosion herzustellen, die für CNC-Maschinen eingesetzt werden. Der als Ausgangsmaterial verwendete Graphitblock wird dabei in aller Regel mittels eines Schaftfräsers aus Hartmetall bearbeitet, dessen Schneidkopf mit Diamant beschichtet ist. Die Härte des Graphitblocks und die starke Beanspruchung des Fräswerkzeugs bringen es mit sich, dass der Schaftfräser einem sehr hohen Verschleiß unterliegt und nach verhältnismäßig kurzer Einsatzdauer unbrauchbar wird, so dass er durch einen neuen Fräser ersetzt werden muss. Da Fräser aus Hartmetall mit beschichteten Schneidköpfen sehr teuer sind, ist die geschilderte Bearbeitung sehr kostenintensiv.

Die Erfindung geht mit dem Oberbegriff des Anspruchs 1 aus von der Druckschrift EP 2 082 835 A1, Figuren 6A und 6B. Der dort gezeigte Fräser hat einen Schneidkopf mit einem sehr langen Schneidenbereich, von dem nur ein Bruchteil beschichtet ist.

Bei einem aus DE 44 05 987 A1 bekannten Kugelfräser, dort als torischer Fräser bezeichnet, erstreckt sich die Beschichtung über den gesamten Schneidenbereich. Dieser setzt sich zusammen aus einem halbkugelförmigen Kopf und einem anschließenden, nicht näher definierten zylindrischen Bereich, dessen Länge dem Radius des Kugelkopfes entspricht. Das hat zur Folge, dass der verhältnismäßig lange Fräskopf beim Fräsen, vor allem von sehr harten Werkstücken, erheblichen Querkräften ausgesetzt ist, die zu einem Bruch des Fräsers führen können. An den Fräskopf schließt sich ein zylindrischer Schaft mit kleinerem Durchmesser an; nähere Angaben über die Funktion und Dimensionierung des Schaftes sind nicht gemacht.

Ein ähnlicher Kugelfräser ist bekannt aus DE 198 24 212 A1. Bei diesem erstrecken sich die Schneiden bis zu der Grenze zwischen dem Kugelschneidkopfbereich und dem als Werkzeugkörper bezeichneten Schaft; dieser Schneidenbereich ist mit Hartmaterial beschichtet. Daran schließen sich Spannuten an, so dass der Schneidenbereich insgesamt sehr lang ist.

Der Erfindung liegt die Aufgabe zugrunde, ein Fräswerkzeug zur Verfügung zu stellen, das bei einer kürzestmöglichen Schneidengeometrie und damit kleinen aufzunehmenden Querkräften nach einem Verschleiß des Schneidkopfs eine Weiterverwendung gestattet, ohne dass der gesamte Fräser entsorgt werden muss.

Die Lösung dieser Aufgabe ergibt sich aus den Merkmalen des Patentanspruchs 1.

Damit besteht die Möglichkeit, den bis zur Zugabenlänge beschichteten oder mit Hartmineral bestückten Schneidkopf nach einem Verschleiß abzutrennen und auf dem Schaft durch Schleifen oder Laserbearbeitung einen neuen, ebenfalls sehr kurzen Schneidkopf zu bilden und mit Hartmineral, insbesondere Diamant zu beschichten oder bestücken.

Da gemäß der Erfindung die Zugabenlänge sehr klein ist und vorzugsweise nur etwa 0,5 mm beträgt, wird mit dieser Maßnahme der Schaft nach einer Verschleißbearbeitung nur unwesentlich verkürzt.

Gemäß der Erfindung hat der Schaft bis zu seinem Einspannende einen geringeren Durchmesser als der Schneidkopf, wodurch ein Freischliff gebildet wird, in dessen Bereich der rotierende Fräser keinen Kontakt mit der zu bearbeitenden Werkstückoberfläche hat. Auf diese Weise ist der auf den Schneidkopf wirkende, seitliche Schneidendruck sehr gering, was insbesondere bei der Bearbeitung von sehr dünnen und damit instabilen Graphitelektroden unabdingbar ist.

Um bei einem derartigen Fräser mit Freischliff die Weiterverwendung nach einem Verschleiß zu ermöglichen, wird der beschichtete Schneidkopf, der auch hier eine sehr kurze Schneidenlänge hat, am Beginn des Freischliffes abgetrennt, so dass in der beschriebenen Weise ein neuer Schneidkopf erzeugt und beschichtet werden kann. Da der Freischliff nur eine sehr geringe Tiefe in radialer Richtung hat, ist der Durchmesserverlust des "neuen" Fräsers nur sehr gering.

In Weiterbildung dieses Merkmals ist vorgesehen, dass auf der Länge des Schaftes mehrere Freischliffabschnitte von im Wesentlichen gleicher Länge ausgebildet sind, die durch Zwischenabschnitte unterbrochen sind, deren Durchmesser dem Durchmesser des Schneidkopfes entspricht. Das hat den Vorteil, dass nach dem Abtrennen eines verschlissenen Schneidkopfes ein Freischliff bis zum nächsten Zwischenabschnitt zur Verfügung steht, an dem bei Bedarf wieder ein Schneidkopf ausgebildet werden kann.

Die Erfindung ist nachstehend an Ausführungsbeispielen erläutert, die in der Zeichnung dargestellt sind. Es zeigen:
Figur 1 die schematische Darstellung eines zu bearbeitenden Werkstücks, beispielsweise einer Elektrode für die Funkenerosion mit Hilfe eines Schaft- oder Kugelfräsers,
Figur 2 die Ansicht eines nicht erfindungsgemäßen Torusfräsers mit einem beschichteten Schneidkopf und einem anschließenden Schaft ohne Freischliff,
Figur 3 eine Variante der Figur 2 mit einen Kugelfräser,
Figur 4 eine erfindungsgemäß ausgebildete Variante der Figur 2 mit einem Torusfräser mit Freischliff und
Figur 5 eine Variante der Figur 4.

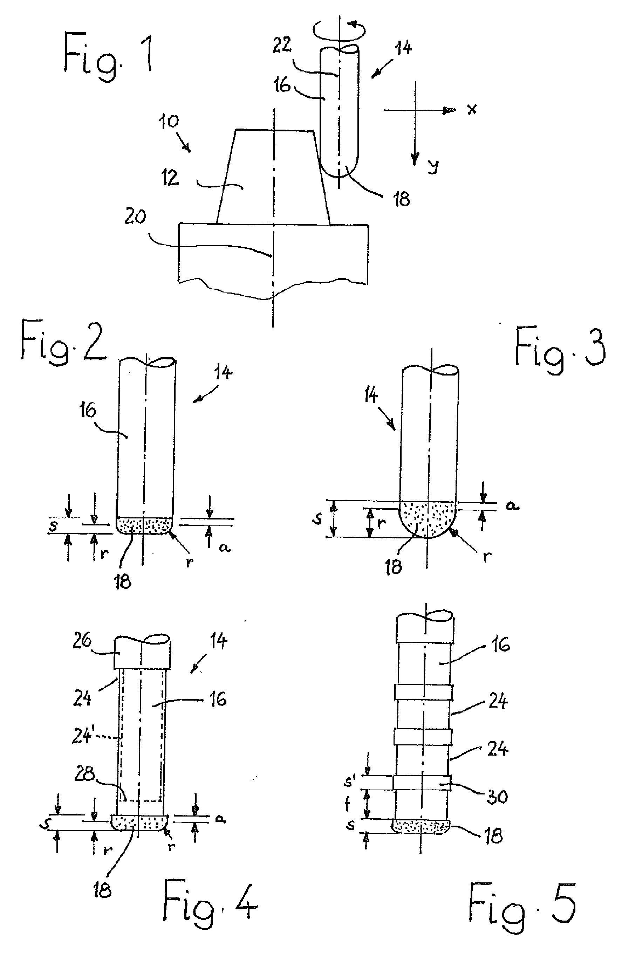

Figur 1 zeigt schematisch die Ansicht eines Werkstücks 10 aus sprödhartem Material, beispielsweise Graphit, dessen kegelförmiges Oberteil 12 zu bearbeiten ist, um beispielsweise eine Elektrode zur Funkenerosion herzustellen. Zur Herstellung des gewünschten Profils des Oberteils 12 dient ein insgesamt mit 14 bezeichnetes Fräswerkzeug, das einen zylindrischen Schaft 16 und einen hier kugelförmigen Schneidkopf 18 hat. Bei der Bearbeitung dreht sich das Werkstück 10 um seine Längsachse 20, wobei gleichzeitig auch das Fräswerkzeug 14 um seine Längsachse 22 in Drehung versetzt wird. Für die Bearbeitung des kegelförmigen Oberteils 12 wird das Fräswerkzeug 14 sowohl in x- als auch in y-Richtung bewegt.

Figur 2 zeigt ein Beispiel für eine Ausbildung des Fräswerkzeugs 14, das hier als so genannter Torusfräser ausgebildet ist. Bei diesem hat der an der Spitze des Schaftes 16 vorgesehene Schneidkopf 18 eine Länge s, die sich zusammensetzt aus dem Radius r der Kantenrundung und einer Zugabenlänge a, die möglichst kurz ist, damit bei der Erneuerung des Fräswerkzeugs 14 durch Abtrennen des mit Diamant beschichteten oder bestückten Schneidkopfes 18 der Längenverlust möglichst gering ist. Die Zugabenlänge a ist kleiner als 1 mm und beträgt vorzugsweise nur etwa 0,5 mm.

Bei einem Verschleiß des Schneidkopfes 18 wird dieser bis zur Beschichtungshöhe abgetrennt, so dass nur die beschichtete Länge s verloren geht. Anschließend wird das hier untere Ende des Schaftes 16 so bearbeitet, beispielsweise durch Schleifen oder Laserbearbeitung, dass die gewünschte Kantenrundung mit dem Radius r erzeugt wird. Im Anschluss daran wird der so erzeugte Schneidkopf bis zu einer Gesamtlänge s = r + a mit Diamant beschichtet oder bestückt.

Figur 3 zeigt eine Variante der Figur 2, bei der das Fräswerkzeug 14 als Kugelfräser ausgebildet ist. Auch hier ist die beschichtete Länge s des Schneidkopfes 18 sehr gering und beträgt ebenfalls s = r + a.

Figur 4 zeigt eine erfindungsgemäße Ausbildung für einen Torusfräser, dessen Schaft 16 auf einem großen Teil seiner Länge einen Durchmesser hat, der kleiner als der Durchmesser des Schneidkopfes 18 ist. Auf diese Weise wird ein Freischliff 24 bis zum Einspannende 26 des Fräswerkzeugs 14 gebildet. Der Freischliff 24 hat eine geringe radiale Tiefe, im Beispiel nur ca. 0,1 mm.

In Figur 4 ist gestrichelt eingezeichnet, dass nach dem Verschleiß des Schneidkopfes 14 dieser bis zur Länge s abgetrennt wird, so dass in der beschriebenen Weise auf dem verbliebenen Ende des Schaftes 16 ein neuer Schneidkopf 18 hergestellt werden kann, der beschichtet wird. Auch bei diesem Schneidkopf endet die Beschichtungslänge, die auch hier das Maß s = r + a hat, in Höhe der gestrichelt dargestellten Linie 28; anschließend daran kann durch eine weitere Durchmesserverringerung ein weiterer Freischliff 24' geringer radialer Tiefe erzeugt werden.

Um zu vermeiden, dass bei dem zu Figur 4 geschilderten Verfahren durch die Erzeugung weiterer Freischliffe nach jedem Abtrennen des Schneidkopfes der Durchmesser des Schaftes 16 zu stark reduziert wird, ist im Beispiel der Figur 5 andeutet, dass auf der Länge des Schaftes 16 mehrere Freischliffabschnitte 24 mit der Länge f ausgebildet sind, die durch Zwischenabschnitte 30 der Länge s' unterbrochen sind, deren Durchmesser dem Durchmesser des Schneidkopfes 18 entsprechen. Nach dem Abtrennen eines verschlissenen Schneidkopfes 18 am unteren Rand des darüber liegenden Zwischenabschnittes 30 wird an diesem der neue Schneidkopf ausgebildet und mit einer Beschichtung versehen. Über diesem steht dann ebenfalls wieder ein Freischliff 24 bis zum nächsten Zwischenabschnitt 30 zur Verfügung.

Wie in Figur 5 angedeutet, ist es von Vorteil, wenn die Länge s' der Zwischenabschnitte 30 geringer ist als die Länge f der Freischliffe 24 und nicht kleiner als die Länge s des beschichteten Schneidkopfes 18.

## Patentansprüche

1. Fräswerkzeug aus Hartmetall mit einem zylinderförmigen Schaft (16) und einem mit Hartmineral, insbesondere Diamant, beschichteten oder bestückten Schneidkopf (18) zum Stirnen von Werkstücken aus sprödhartem Material, wobei der Schneidkopf (18) als Torusfräser oder Kugelfräser mit einer Kantenrundung mit einem Radius (r) ausgebildet und bis zu einer Länge (s) mit Hartmineral bestückt oder beschichtet ist, die sich aus dem Radius (r) und einer Zugabenlänge (a) zusammensetzt, **dadurch gekennzeichnet, dass** die Zugabenlänge (a) kleiner als der Radius (r) und kleiner als 1 mm ist, dass die Länge (s) den Schneidenbereich und den abtrennbaren Abschnitt des Schneidkopfes (18) definiert und dass der Schaft (16) bis zu seinem Einspannende (26) wenigstens einen Freischliffabschnitt (24) mit einem geringeren Durchmesser als der Schneidkopf (18) hat.

2. Fräswerkzeug nach Anspruch 1, **dadurch gekennzeichnet, dass** die Zugabenlänge (a) vorzugsweise 0,5 mm beträgt.

3. Fräswerkzeug nach Anspruch 1 oder 2, **dadurch gekennzeichnet, dass** auf der Länge des Schaftes (16) mehrere Freischliffabschnitte (24) von im Wesentlichen gleicher Länge (f) ausgebildet sind, die durch Zwischenabschnitte (30) der Länge (s') unterbrochen sind, deren Durchmesser dem Druchmesser des Schneidkopfes (18) entspricht.

4. Fräswerkzeug nach Anspruch 3, **dadurch gekennzeichnet, dass** die Länge (s') der Zwischenabschnitte (30) geringer als die Länge (f) der Freischliffe (24) und nicht kleiner als die Länge (s) des beschichteten Schneidkopfes (18) ist.

## Claims

1. Milling tool of hard metal comprising a cylindrical shaft (16) and a cutter head (18) which is coated or charged with hard mineral, in particular diamond, adapted for spot facing work pieces of glasshard material, said cutter head (18) being a toroidal or spherical cutter of which the curved edge has a radius (r) and which is coated or charged with hard mineral up to a length (s) composed of said radius (r) and of an additional length (a), **characterized in that** the additional length (a) is less than said radius (r) and less than 1 mm, that the length (s) determines the cutting zone and the separable section of the cutter head (18), and that the shaft (16) is provided up to its clamping end (26) with at least one clearance section (24) the diameter of which is smaller than that of the cutter head (18).

2. Milling tool according to claim 1 wherein the additional length (a) is preferably of 0,5 mm.

3. Milling tool according to claim 1 or 2 wherein along the length of the shaft (16) a plurality of clearance sections (24) with preferably the same lengths (f) are provided alternating with intermediate sections (30) having a length (s') and a diameter that corresponds to the diameter of the cutter head (18).

4. Milling tool according to claim 3 wherein the length (s') of said intermediate sections (30) is less than the length (f) of said clearance sections (24) but not smaller than the length (s) of the coated cutter head (18).

## Revendications

1. Outil de fraisage en métal dur comprenant une tige cylindrique (16) et une tête de coupe (18) recouverte ou équipée d'un minéral dur, particulièrement de diamant, pour fraiser en bout des pièces en matériau dur et cassant, la tête de coupe (18) étant en forme de fraise torique ou sphérique ayant une courbure d'arête de rayon (r) et recouverte ou equipée d'un minéral dur jusqu'à une longueur (s) qui se compose dudit rayon (r) et d'une longueur additionelle (a), **caractérisé par le fait que** ladite longueur additionelle (a) est inférieure au rayon (r) et inférieure à 1 mm, **par le fait que** la longueur (s) détermine la section tranchante et la section séparable de la tête de coupe (18), et **par le fait que** la tige (16) présente jusqu'à son extrémité de serrage au moins un secteur en dépouille (24) d'un diamètre inférieur à la tête de coupe (18).

2. Outil de fraisage selon la revendication 1, **caractérisé par le fait que** la longueur additionelle (a) mesure de préférence 0,5 mm.

3. Outil de fraisage selon la revendication 1 ou 2, **caractérisé par le fait que** la tige (16) présente sur sa longueur plusieurs secteurs en dépouille (24) ayant sensiblement la même longueur (t), alternant avec des secteurs intermédiares (30) d'un longueur (s') et dont le diamètre correspond au diamètre de la tête de coupe (18).

4. Outil de fraisage selon la revendication 3, **caractérisé par le fait que** la longueur (s') des secteurs intermédiares (30) est inférieure à la longueur (f) des secteurs en dépouille (24), mais non inférieure à la longueur (s) de la tête de coupe (18).
